# EUROPÄISCHE PATENTSCHRIFT

(11) **EP 2 240 996 B1**
(45) Veröffentlichungstag und Bekanntmachung des Hinweises auf die Patenterteilung: **06.11.2013**
(21) Anmeldenummer: 08774534.5
(22) Anmeldetag: 30.06.2008
(51) Int. Cl.: H02K 5/04, H02K 5/14

(54) **GEHÄUSE FÜR DEN ANTRIEB EINES ELEKTRISCHEN GERÄTS, INSBESONDERE EINES HAUSHALTSGERÄTS**
HOUSING FOR THE DRIVE OF AN ELECTRICAL DEVICE, PARTICULARLY A HOUSEHOLD APPLIANCE
CARTER POUR LOGER L'ENTRAÎNEMENT D'UN APPAREIL ÉLECTRIQUE, EN PARTICULIER D'UN APPAREIL ÉLECTROMÉNAGER

(30) Priorität: 01.02.2008 DE 102008007212
(43) Veröffentlichungstag der Anmeldung: 20.10.2010
(60) Teilanmeldung: 10193294.5
(73) Patentinhaber: BSH Bosch und Siemens Hausgeräte GmbH, 81739 München (DE)
(72) Erfinder: BOTT, Erich, 97618 Hollstadt (DE); BÜTTNER, Maria, 97659 Schönau (DE); GEIGER, Thomas, 97616 Bad Neustadt (DE); KIRCHNER, Andreas, 99867 Gotha (DE); MANGER, Dieter, 97618 Wollbach (DE); PECAT, Herbert, 97633 Saal / Waltershausen (DE); REISENWEBER, Walter, 97638 Mellrichstadt (DE); TRIPP, Thomas, 97654 Bastheim (DE)
(86) Internationale Anmeldenummer: PCT/EP2008/058381
(87) Internationale Veröffentlichungsnummer: WO 2009/095090

(56) Entgegenhaltungen:
- WO-A-2006/042919
- DE-A1- 3 640 469
- DE-A1- 19 628 883
- DE-A1- 19 717 594
- JP-A- 56 046 642
- JP-A- 2007 300 739
- US-A- 4 186 319
- US-A- 4 480 378
- US-A- 5 668 429

## Beschreibung

### Hintergrund der Erfindung

Die Erfindung betrifft ein Gehäuse für den Antrieb eines elektrischen Geräts, insbesondere eines Haushaltsgeräts, mit einer radialen Wandung sowie mindestens einer ersten stirnseitigen Wandung, welche mit einer oder mehreren Verprägungen versehen ist.

### Stand der Technik

Ein Gehäuse der eingangs genannten Art zur Aufnahme des Rotor eines elektrischen Antriebs für ein Haushaltsgerät wird in der Offenlegungsschrift DE 197 17 594 A1 offenbart. Das aus Stahlblech gepresste, topfförmige Gehäuse weist eine zylinderförmige radial Wandung sowie eine stirnseitige Wandung auf, wobei koaxial zum Zentrum der stirnseitigen Wandung eine nach außen ausgewölbte, domartige Verprägung vorgesehen ist. Diese nimmt bei der Montage des Haushaltsgeräts das Wälzlager des Rotors auf. Durch Öffnungen in der radiale Wandung hindurch sind ferner Bürstenanordnungen des Stators in Richtung des Rotors in das Gehäuse einschiebbar, welche von klammerartig nach innen ausgeformten Verprägungen in der stirnseitigen Wandung aufgenommen werden.

Derartige Gehäuse haben sich gut bewährt. Um eine hinsichtlich statischer Belastungen und Vibrationen ausreichende Festigkeit aufzuweisen, weist das zur Gehäusefertigung verwendete Stahlblech jedoch eine relativ große Dicke auf, die beispielsweise 1,25 mm betragen kann. Das Gehäuse ist wegen des hohen Materialeinsatzes vergleichsweise schwer und teuer.

Aus der Praxis ist ferner bekannt, die Gehäuse der elektrischen Antriebe von Haushaltsgeräten durch Spritzgießen von Kunststoffen auszuformen. Hierdurch wird zwar das Gewicht des Gehäuses reduziert, durch die schlechte Wärmeleitfähigkeit der Kunststoffe kann sich jedoch auch die Kühlung des elektrischen Antriebs verschlechtern. In Abhängigkeit von Art und Dimensionierung des Kunststoffs kann diese Maßnahme außerdem mit einer Festigkeitsabnahme einhergehen.

In dem Patent US 5,668,429 ist eine dynamoelektrische Maschine vom Typ eines Elektromotors offenbart, dessen Gehäuse zwei Schalen mit jeweils einer stirnseitigen Wandung und einer davon schürzenartig auskragenden radialen Wandung aufweist. Die stirnseitigen Wandungen weisen kanalartige, sternförmig in Richtung des Zentrums verlaufende und nach außen ausgewölbte Verprägungen auf. Eine ähnliche Konstruktion ist auch aus dem Patent US 4,480,378 bekannt, bei dem die Kanäle jedoch am Rand der Wandung in zum Rand hin offene und mit Schlitzen versehene Aufnahmen für senkrecht zur stirnseitigen Wandung verlaufende Streben einmünden.

Die Offenlegungsschrift DE 19715594 A1 offenbart eine Bürstenanordnung für eine elektrische Maschine, bei der die Bürstenhülse mit einem nicht leitenden Tragteil verbunden ist, das in eine Führung auf der Innenseite der Stirnwand der Maschine einschiebbar ist. Weiter offenbart das Patent US 4,186,319 eine stirnseitige Abdeckung einer elektrodynamischen Maschine, wobei die Abdeckung zur Versteifung mehrere sich vom Zentrum weg erstreckende Verprägungen aufweist.

Die Offenlegungsschrift DE 3640469 A1 offenbart eine Lagerbrücke für die Welle eines Elektromotors, die von einem Basisrahmen ausgehende Schenkel aufweist, wobei die Schenkel in einer Aufnahmeeinrichtung für ein Lager sowie Kohlehalterungen einmünden. Schließlich offenbart die Offenlegungsschrift DE 19628883 A1 eine an einem Gehäuse befestigten Wabenplatte, die in einer Drehmaschine als Dämpfungsplatte wirken soll.

### Der Erfindung zugrundeliegende Aufgabe

Der Erfindung liegt die Aufgabe zugrunde, ein gattungsgemäßes Gehäuse für den Antrieb eines elektrischen Geräts derart auszubilden, dass bei genngem Gewicht und Materialeinsatz eine ausreichende Festigkeit und Kühlleistung bewirkt wird.

### Erfindungsgemäße Lösung

Die der Erfindung zugrunde liegende Aufgabe wird dadurch gelöst, dass wenigstens eine erste Verprägung in der stirnseitigen Wandung kanalartig ausgebildet ist und sich zwischen einander gegenüber liegenden Bereichen des Umfangs der stirnseitigen Wandung erstreckt. Als kanalartig ist dabei jede Verprägung anzusehen, die sich von der stirnseitigen Wandung mit im Wesentlichen U-förmigem Querschnitt wegwölbt und eine im Verhältnis zur Breite der Verprägung vergrößerte Länge aufweist. Anders als bei den vorbekannten Verprägungen sind diese kanalartigen Verprägungen dazu geeignet, die stirnseitige Wandung des Gehäuses wirksam hinsichtlich der bei einem elektrischen Antrieb wirkenden Kräfte zu versteifen. Die Seitenflächen der ersten kanalartigen Verprägung bewirken dabei eine günstige Krafteinleitung in die radiale Wandung.

Durch die Erfindung ist es möglich, die Menge des für das Gehäuse eingesetzten Materials zu reduzieren, was bei der Herstellung erhebliche Kostenvorteile bieten kann. Insbesondere kann die Wandstärke des Blechs reduziert werden, z.B. unter den Wert von 1 mm. Durch die Materialverringerung ist vorteilhaft eine Gewichtsreduzierung erreichbar, die unter Anderem Transportkosten senken und die Handhabbarkeit des Geräts durch den Anwender erleichtern kann. Die verbesserte Krafteinleitung ermöglicht es auch, Lüftungsöffnungen größer auszulegen, was insbesondere die Kühleigenschaften des Gehäuses verbessern und durch eine Verringerung des Luftwiderstands Strömungsgeräusche vorteilhaft reduzieren kann.

### Bevorzugte Ausgestaltung der Erfindung

Vorteilhafte Aus- oder Weiterbildungen, welche einzeln oder in Kombination miteinander eingesetzt werden können, sind Gegenstand der abhängigen Ansprüche.

Mit Vorteil verläuft die erste kanalartige Verprägung in radialer Richtung durch das Zentrum der stirnseitigen Wandung, so dass im Bereich des Zentrums wirkende Belastungen wirksam in Richtung der radialen Wandung abgeleitet werden können. Die stirnseitige Wandung kann durch diese Ausbildung ferner eine relativ große Wölbfestigkeit und/oder Steifigkeit aufweisen.

Die erste kanalartige Verprägung ist vorzugsweise nach außen ausgewölbt ausgeformt, so dass das nutzbare Volumen des Gehäuses durch die erfindungsgemäße Ausbildung nicht verringert wird.

Mit besonderem Vorteil ist dabei vorgesehen, dass die erste kanalartige Verprägung in einander gegenüberliegende Ausnehmungen der radialen Wandung einmündet. Der Kraftfluss vom Zentrum der stirnseitigen Wandung zu der radialen Wandung wird hierdurch zwar geringfügig verlängert, die erste kanalartige Verprägung kann im Gegenzug jedoch zur Halterung von Bauteilen vorgesehen werden, welche durch die als Montageöffnungen ausgebildeten Ausnehmungen in das Gehäuse einsetzbar sind. Darüber hinaus kann die erste kanalartige Verprägung als Führung für den Kühlluftstrom wirken und diesen zum Rotor weg zu der radialen Wandung leiten. Die großflächig ausbildbaren Ausnehmungen können dabei als wirkungsvolle Luftaustrittsöffnungen dienen.

Die erste kanalartige Verprägung ist in einer bevorzugten Ausführung als Aufnahme für die Bürstenanordnungen des Antriebs ausgebildet, welche durch die Ausnehmungen hindurch in das Gehäuse einführbar sind. Gegenüber den vorbekannten klammerartigen Verprägungen ist das Einführen der Bürstenanordnungen bei Montage und Wartung des elektrischen Antriebs wegen der schienenartigen Führung erleichtert, ferner können die Bürstenanordnungen selber zur Versteifung der stirnseitigen Wandung genutzt werden.

Die Versteifung der stirnseitigen Wandung kann noch weiter dadurch erhöht werden, dass eine zweite kanalartige Verprägung, die gegenüber der ersten kanalartigen Verprägung um einen Winkel von vozugsweise mehr als 60°, besonders vorzugsweise um einen Winkel von im Wesentlichen 90°, verdreht ist, durch das Zentrum der stirnseitigen Wandung verläuft.

Nach einer weiteren bevorzugten Ausbildung der Erfindung weist das Gehäuse koaxial zum Zentrum der stirnseitigen Wandung eine nach außen weisende domartige Verprägung für die Aufnahme einer Lageranordnung des Antriebs auf, so dass der Integrationsgrad und das nutzbare Volumen des Gehäuses noch weiter erhöht werden. Dabei ist insbesondere vorgesehen, dass die Prägetiefe der domartigen Verprägung größer als die Prägetiefe der ersten und/oder zweiten kanalartigen Verprägung ausgebildet ist. Die Prägetiefe der domartigen Verprägung entspricht dabei beispielsweise mindestens der Breite der dort eingesetzten Lageranordnung, so dass diese vollständig außerhalb des eigentlichen Nutzvolumens des Gehäuses angeordnet ist und die Bürstenanordnung somit bereits unmittelbar unterhalb der stirnseitigen Wandung auf den Rotor wirken kann.

Zur Verbesserung des Kraftflusses von der domartigen Verprägung zum Umfang der radialen Wandung des Gehäuses hin können darüber hinaus weitere rampenartige Verprägungen vorgesehen sein, die von der Radialfläche der domartigen Verprägung zu den Basisflächen der ersten und/oder zweiten kanalartigen Verprägung verlaufen.

Bevorzugt ist ferner, dass beiderseits des Zentrums in die erste Verprägung der stirnseitigen Wandung Querprägungen eingelassen sind, welche diese querend im Wesentlichen rechtwinklig zur ersten Verprägung verlaufen. Diese Querprägungen können die erste kanalartige Verprägung versteifen und insbesondere der Stabilisierung der dort eingesetzten Bürstenanordnungen dienen.

Diese Ausbildung ist dann besonders wirkungsvoll, wenn die größte Prägetiefe der Querprägung größer als die Prägetiefe der ersten kanalartigen Verprägung ausgebildet ist, wobei die Prägetiefe der Querprägung beiderseits der ersten Verprägung rampenartig abnimmt.

Nach einer weiteren bevorzugten Ausbildung der Erfindung kann vorgesehen werden, dass von den Seitenflächen der zweiten Verprägung Schrägprägungen in der stirnseitigen Wandung schräg in Richtung des Umfangs abragen. Diese können radiale Schwingungen des Antriebs bereits dann wirkungsvoll kompensieren, wenn die Prägetiefe der Schrägprägungen umfangsfern der Prägetiefe der zweiten kanalartigen Verprägung entspricht.

Dabei ist mit Vorteil vorgesehen, dass die Prägetiefe der Schrägprägungen zum Umfang hin rampenartige abfallend ausgeführt ist. Hierdurch können Steifigkeitssprünge im Umfangsbereich der stirnseitigen Wandung vermieden werden.

Beiderseits des Zentrums können darüber hinaus Bohrungen in die Basisfläche der zweiten kanalartigen Verprägung eingelassen werden, welche der radialen Fixierung des Gehäuses in dem elektrischen Gerät dienen. Der Formschluss wird dabei vorzugsweise dadurch herbeigeführt, dass die Bohrungen jeweils mit einem nach außen weisenden Kragenzug ausgestattet sind.

Nach einer weiteren vorteilhaften Ausbildung der Erfindung weist die radiale Wandung des Gehäuses eine erste, sich zur stirnseitigen Wandung hin konisch verjüngende Radialfläche und eine sich daran anschließende, zylindrisch verlaufende Radialfläche auf. Der im Übergang zwischen zylindrischem und konischem Bereich entstehende Knick versteift das Gehäuse zusätzlich. Darüber hinaus können derart gestaltete Gehäuse nach der Fertigung für deren Transport teilweise ineinander geschachtelt werden, wodurch sich die Transportkosten verringern.

Mit besonderem Vorteil sind in der radiale Wandung, insbesondere im Bereich der sich konisch verjüngenden Radialfläche, weitere Lüftungsöffnungen vorgesehen, die insbesondere bei der der zuvor genannten konisch verjüngten Gehäuseausbildungen sehr großzügig ausgeführt werden können. Der Kraftfluss um die Lüftungsöffnungen und die Ausnehmungen für die Montage der Bürstenanordnungen herum kann in diesem Fall dadurch optimiert werden, dass in die sich konisch verjüngende Radialfläche Axialprägungen eingelassen sind.

Vorzugsweise sind Bereiche mindestens einer Wandung des Gehäuses mit wabenförmigen Verprägungen versehen. Das Gehäuse ist vorzugsweise das einer Komponente eines elektrischen Haushaltsgeräts, insbesondere des Antriebs eines elektrischen Geräts, insbesondere eines Haushaltsgeräts. Grundsätzlich ist es aber auch denkbar, die wabenförmige Struktur z.B. zur Versteifung eines Gehäusedeckels oder eines Staubraumdeckels des Haushaltsgeräts, insbesondere eines Staubsaugers, einzusetzen.

Die wabenartige Verprägung kann ohne zusätzlichen Materialaufwand zu einer Versteifung des Gehäuses beitragen, insbesondere bei größeren, zum Verwölben neigenden Flächen. Die mehrdimensionale Wölbstrukturen bildenden Verprägungen können bereits in das Halbzeug des Gehäuses eingeformt werden, da sie einer späteren Umformung grundsätzlich nicht entgegen stehen.

In einer bevorzugten Ausführung des erfndungsgemäßen Gehäuses ist eine erste stirnseitige Wandung und/oder eine zweite stirnseitigen Wandung mit wabenförmigen Verprägungen versehen. Diese Strukturierung wirkt insbesondere an Gehäuseflächen eines elektrischen Antriebs geräuschmindernd, an welchen beim Betreiben des Antriebs der Kühlluftstrom entlang streicht oder welche in Schwingung geraten können. Die Kühlwirkung des Luftstroms verbessert sich dabei infolge vergrößerter wärmeabgebender Oberfläche.

Die zweite stirnseitige Wandung des Gehäuse ist nach einer bevorzugten Ausbildung der Erfindung deckelartig aufsetzbar ausgebildet und kann somit zur Montage oder Wartung des Ankers, seiner Lagerung oder des Stators abgenommen werden. Die zweite stirnseitige Wandung kann dabei auch einem Kragen des Gehäuses benachbart vorgesehen sein und an diesem befestigt werden.

Der Antrieb ist vorzugsweise der Antrieb eines Gebläses, z.B. des Gebläses eines Der Antrieb ist vorzugsweise der Antrieb eines Gebläses, z.B. des Gebläses eines Staubsaugers, insbesondere eines Haushaltsstaubsaugers.

### Kurzbeschreibung der Figuren

Die Erfindung wird im Folgenden anhand schematischer Zeichnungen an zwei Ausführungsbeispielen mit weiteren Einzelheiten näher erläutert.

Es zeigen:
- Fig. 1:: eine perspektivische Ansicht eines erfindungsgemäß ausgeführten Gehäuses für den Antrieb eines elektrischen Haushaltsgerätes;
- Fig. 2:: ein nach dem Stand der Technik ausgebildetes Gehäuse für den Antrieb eines ähnlichen elektrischen Haushaltsgeräts;
- Fig. 3: ein Gehäuse für den Antrieb eines elektrischen Haushaltsgeräts nach einer anderen Ausbildung der Erfindung;
- Fig. 4: eine andere Ansicht des in Fig. 3 gezeigten Gehäuses;
- Fig. 5: einen Schnitt durch einen verprägten Wandungsbereich des Gehäuses nach Fig. 4 und 5.

### Ausführliche Beschreibung anhand zweier Ausführungsbeispiele im Vergleich zum Stand der Technik

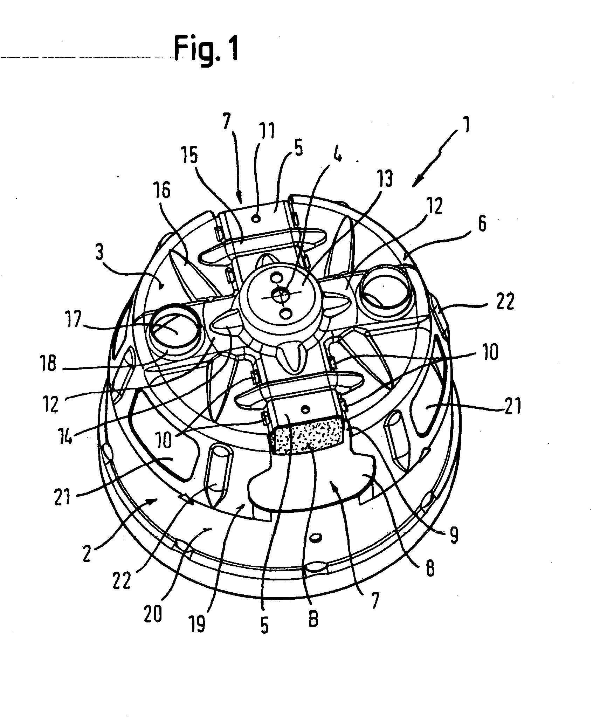

Das in Figur 1 dargestellte Gehäuse 1 dient der Aufnahme und Lagerung eines elektrischen Antriebs, im Ausführungsbeispiel für ein elektrisch betriebenes Haushaltsgerät. Das Gehäuse 1 ist aus einem relativ dünnen Metallblech, insbesondere aus Stahlblech, mit einer Dicke von weniger als 1,0 mm durch Pressen geformt. Im Ausführungsbeispiel ist eine Blechdicke von 0,8 mm zur Aufnahme der beim Betreiben des Haushaltsgeräts auftretenden statischen und dynamischen Lasten ausreichend.

Das topfartige Gehäuse 1 besteht aus einer radialen Wandung 2 sowie einer oberen stirnseitigen Wandung 3 und ist nach unten offen ausgeführt. Die Ortsangaben beziehen sich dabei auf die übliche, aber nicht zwingende Einbaulage des Gehäuses 1.

Quer über die stirnseitige Wandung 3 hinweg und durch deren Zentrum 4 hindurch verläuft eine erste kanalartige Verprägung 5, welche sich mit ihren einander gegenüberliegenden Endbereichen jeweils bis zum Umfang 6 der stirnseitigen Wandung erstreckt. Die geradlinig verlaufende Verprägung 5 weist einen U-förmigen Querschnitt auf und wölbt sich vom Inneren des Gehäuses 1 weg nach außen vor.

Im Bereich des Umfangs 6 mündet die Verprägung 5 an beiden Enden in Ausnehmungen 7 in der radialen Wandung 2 ein. Die Ausnehmungen 7 sind T-förmig ausgebildet, wobei die querliegende Basis 8 unten angeordnet ist und der freie Schenkel 9 der Ausnehmung 7 nach oben ragt. Die Breite des Schenkels 9 ist dabei geringfügig größer gewählt als die Breite der kanalförmigen Verprägung 5. Durch die Ausnehmungen 7 hindurch können die andeutungsweise dargestellten Bürstenanordnungen B für den elektrischen Antrieb in das Gehäuse 1 eingeschoben werden, welche auf der Innenseite der stirnseitigen Wandung 3 in der ersten Verprägung 5 schienenartig geführt sind. Die Sicherung der Bürstenanordnungen B zum Inneren des Gehäuses 1 hin erfolgt über Haken 10, welche nach innen auskragend in den Übergangsbereich zwischen stirnseitiger Wandung 3 und der ersten Verprägung 5 eingepresst sind. Zur radialen Sicherung ist jeweils ein Formschluss zwischen der Bürstenanordnung B und einer Bohrung 11 in der ersten Verprägung 5 vorgesehen.

Rechtwinklig zur ersten Verprägung 5 verläuft eine zweite kanalartige Verprägung 12 zwischen einander gegenüberliegenden Bereichen des Umfangs 6 über die stirnseitige Wandung 3, welche endseitig rampenartig in den Übergang zur radialen Wandung 2 einläuft. Die Prägetiefe von erster Verprägung 5 und zweiter Verprägung 12, die in Aufsicht auf das Gehäuse 1 kreuzförmig angeordnet sind, ist im Wesentlichen gleich ausgebildet und entspricht etwa einem Zwanzigstel des Radius der stirnseitigen Wandung 3 und einem Zehntel der Breite der Verprägungen 5, 12.

Koaxial zum Zentrum 4 der stirnseitigen Wandung 3 wölbt sich eine domartige Verprägung 13 nach außen vor, die der Aufnahme eines nicht gezeigten Wälzlagers zur Lagerung des Rotors des elektrischen Antriebs dient. Die Prägetiefe der domartigen Verprägung 13 ist deutlich größer als die Prägetiefe der kanalartigen Verprägungen 5, 12 ausgeführt, wodurch das Wälzlager mit seiner gesamten Breite in die domartige Verprägung 13 eingefügt werden kann und das Nutzvolumen des Gehäuses 1 nicht verringert. Zur Versteifung sind darüber hinaus in kreuzartiger Anordnung rampenförmige Verprägungen 14 vorgesehen, welche sich von der Radialfläche der domartigen Verprägung in die kanalartigen Verprägungen 5, 12 hinein erstrecken.

Eine zusätzliche Querstabilisierung der montierten Bürstenanordnungen wird durch Querprägungen 15 erzielt, welche sich beiderseits des Zentrums 4 beziehungsweise der domartigen Verprägung 13 über die ersten kanalartigen Verprägungen 5 hinweg erstrecken und mit ihren einander gegenüberliegenden Enden beiderseits der Verprägung 5 rampenartig in die stirnseitige Wandung 3 auslaufen. Die größte Prägetiefe der Querprägung 15 entspricht etwa dem Doppelten der Prägetiefe der ersten kanalartigen Verprägung 5.

Von den Seitenflächen der zweiten kanalartigen Verprägung 12 weg ragen ferner in Aufsicht keilförmige Schrägprägungen 16 schräg in Richtung des Umfangs 6 ab, deren Prägetiefe umfangsfern der Prägetiefe der zweiten kanalartigen Verprägung 12 entspricht und zum Umfang 6 hin rampenartig abfällt. Die Schrägprägungen 16 kompensieren wirkungsvoll radiale Schwingungen, die beim Betrieb des elektrischen Antriebs auftreten. In die Basisfläche der zweiten kanalartigen Verprägung 12 sind ferner Bohrungen 17 eingelassen, die jeweils mit einem nach außen ragenden Kragenzug 18 versehen sind und der radialen Fixierung des Gehäuses 1 dienen.

Die radiale Wandung 2 des Gehäuses 1 ist im Ausführungsbeispiel in eine erste, sich zur stirnseitigen Wandung 3 hin konisch verjüngende Radialfläche 19 und eine sich daran anschließende, zylindrisch verlaufende Radialfläche 20 gegliedert. Im Bereich der sich konisch verjüngenden Radialfläche 19 sind neben den einander gegenüberliegenden Ausnehmungen 7 über den Umfang verteilt mehrere großflächige Lüftungsöffnungen 21 eingelassen, welche einen widerstandsarmen Austritt der Kühlluft ermöglichen. Dazwischen liegende Axialprägungen 22 versteifen die verbleibenden Bereiche der sich konisch verjüngenden Radialfläche 19, so dass das Gehäuse 1 trotzdem eine hohe mechanische Festigkeit aufweist.

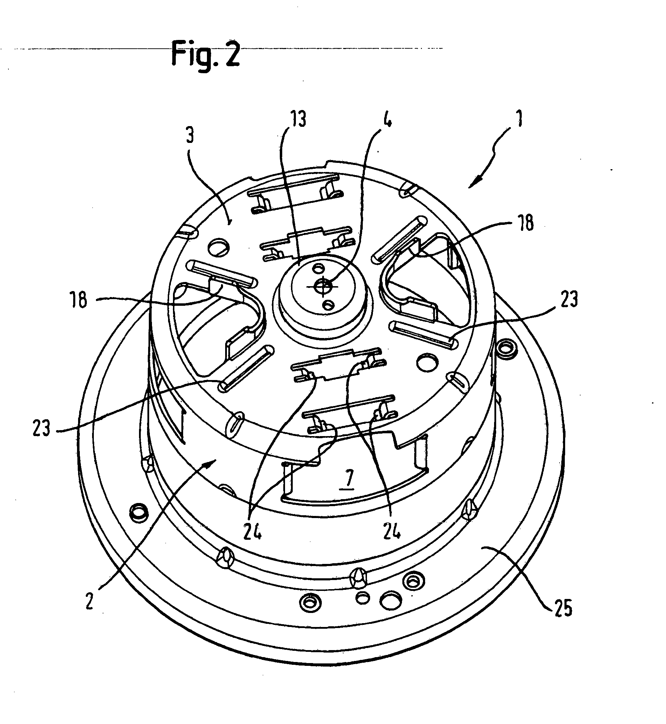

Zum Vergleich ist in Figur 2 ein dem Stand der Technik entsprechendes Gehäuse 1 aus einem Stahlblech von 1,25 mm Dicke gezeigt, dessen stirnseitige Wandung 3 bis auf die domartige Verprägung 13 zur Aufnahme des Wälzlagers, partielle Kragenzüge 18 und mehrere schwach ausgeführte Verprägungen 23 im Wesentlichen plan ausgebildet ist. Im Bereich dieser ebenen Fläche sind ferner Klammern 24 zur Halterung der hier nicht dargestellten Bürstenanordnungen vorgesehen. Die radiale Wandung 2 des Gehäuses 1 ist dabei zylindrisch ausgebildet und weist an ihrem offenen Ende einen ausgeprägten Kragen 25 auf.

Die Reduzierung der Blechstärke von 1,25 mm auf 0,8 mm kann Herstellungs- und Transportkosten erheblich verringern. Die großflächigen Lüftungsöffnungen können vorteilhaft die Kühlleistung erhöhen und die Geräuschentwicklung mindern.

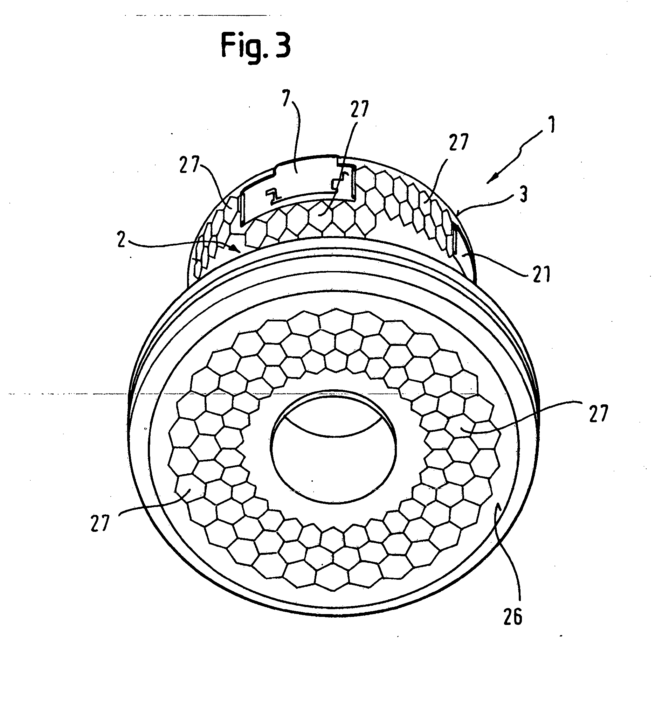

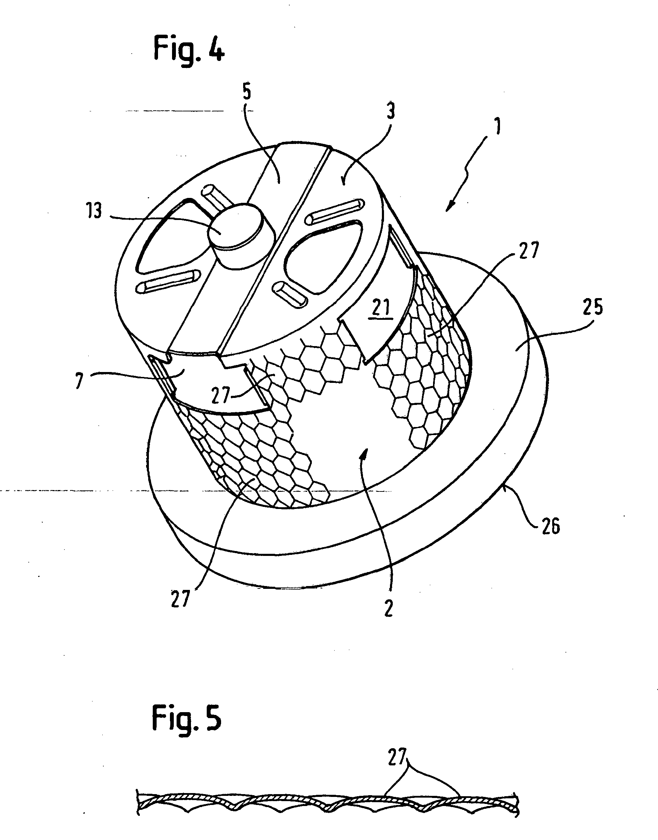

Bei dem in Fig. 3 und 4 gezeigten Gehäuse 1 für den Antrieb eines elektrischen Geräts ist neben der radialen Wandung 2 nicht nur eine erste stirnseitige Wandung 3, sondern dieser gegenüberliegend am anderen Abschluss der radialen Wandung 2 noch eine zweite stirnseitige Wandung 26 vorgesehen. Die zweite stirnseitige Wandung 26 erstreckt sich über den an die radiale Wandung 2 angeformten Kragen 25 hinweg und ist auf diesem lösbar verankert. Zur Montage oder Entnahme des elektrischen Antriebs kann die zweite stirnseitige Wandung 26 gelöst werden.

Um sowohl der zweite stirnseitige Wandung 26 als auch die radiale Wandung 2 zu versteifen und die Geräuschentwicklung durch die an diesen entlang streichende Kühlluft sowie durch Schwingungen zu verringern, sind die Wandungen 2, 26 örtlich mit wabenartigen, gewölbten Verprägungen 27 versehen, welche im Ausführungsbeispiel in Aufsicht sechseckig ausgeführt sind. In der radialen Wandung 2 sind die wabenartigen Verprägungen 27 insbesondere zwischen den Ausnehmungen 7 und den Lüftungsöffnungen 21 sowie zwischen diesen und dem Kragen 25 vorgesehen. Diese in Fig. 5 im Schnitt dargestellten mehrdimensionalen Wölbstrukturen führen bei geringer Wanddicke und niedrigem Gewicht zu einer hohen und darüber hinaus isotropen Biegesteifigkeit der verprägten Wandungsbereiche.

Die in der vorstehenden Beschreibung, den Ansprüchen und den Zeichnungen offenbarten Merkmale können sowohl einzeln als auch in beliebiger Kombination für die Verwirklichung der Erfindung in ihren verschiedenen Ausgestaltungen von Bedeutung sein. Darüber hinaus wird nicht nur die Geräuschentwicklung, sondern auch die Geräuschübertragung verringert.

### Bezugszeichen

- 1: Gehäuse
- 2: Wandung (radial)
- 3: Wandung (stimseitig)
- 4: Zentrum (der stirnseitigen Wandung)
- 5: Verprägung (kanalartig)
- 6: Umfang (der stirnseitigen Wandung)
- 7: Ausnehmung
- 8: Basis (der Ausnehmung)
- 9: Schenkel (der Ausnehmung)
- 10: Haken
- 11: Bohrung
- 12: Verprägung (kanalartig)
- 13: Verprägung (domartig)
- 14: Verprägung (rampenartig)
- 15: Querprägung
- 16: Schrägprägung
- 17: Bohrung
- 18: Kragenzug
- 19: Radialfläche (konisch)
- 20: Radialfläche (zylindrisch)
- 21: Lüftungsöffnung
- 22: Axialprägung
- 23: Verprägung
- 24: Klammer
- 25: Kragen
- 26: Wandung (stirnseitig)
- 27: Verprägung (wabenartig)

B Bürstenanordnung

## Patentansprüche

1. Gehäuse (1) für den Antrieb eines elektrischen Geräts, insbesondere eines Haushaltsgeräts, mit einer radialen Wandung (2) sowie mindestens einer ersten stirnseitigen Wandung (3), welche mit einer oder mehreren Verprägungen (5, 23) versehen ist, wobei wenigstens eine erste Verprägung (5) in der stirnseitigen Wandung (3) kanalartig ausgebildet ist und sich zwischen einander gegenüber liegenden Bereichen des Umfangs (6) der stirnseitigen Wandung (3) erstreckt, **dadurch gekennzeichnet, dass** die erste kanalartige Verprägung (5) in einander gegenüberliegende Ausnehmungen (7) der radialen Wandung (2) einmündet und als Aufnahme für die Bürstenanordnungen (B) des Antriebs ausgebildet ist, welche durch die Ausnehmungen (7) hindurch in das Gehäuse (1) einführbar sind.

2. Gehäuse nach Anspruch 1, **dadurch gekennzeichnet, dass** die erste kanalartige Verprägung (5) in radialer Richtung durch das Zentrum (4) der stirnseitigen Wandung (3) verläuft.

3. Gehäuse nach Anspruch 1 oder 2, **dadurch gekennzeichnet, dass** die erste kanalartige Verprägung (5) nach außen ausgewölbt ausgeformt ist.

4. Gehäuse nach einem der vorhergehenden Ansprüche, **dadurch gekennzeichnet, dass** eine zweite kanalartige Verprägung (12) gegenüber der ersten kanalartigen Verprägung (5) um 90° verdreht durch das Zentrum (4) der stirnseitigen Wandung (3) verläuft.

5. Gehäuse nach einem der vorhergehenden Ansprüche, **dadurch gekennzeichnet, dass** koaxial zum Zentrum (4) der stirnseitigen Wandung (3) eine nach außen weisende domartige Verprägung (13) für die Aufnahme einer Lageranordnung des Antriebs vorgesehen ist.

6. Gehäuse nach Anspruch 5, **dadurch gekennzeichnet, dass** die Prägetiefe der domartigen Verprägung (13) größer als die Prägetiefe der ersten und/oder zweiten kanalartigen Verprägung (5, 12) ausgebildet ist.

7. Gehäuse nach Anspruch 6, **dadurch gekennzeichnet, dass** weitere rampenartige Verprägungen (14) vorgesehen sind, die von der Radialfläche der topfartigen Verprägung zu den Basisflächen der ersten und/oder zweiten kanalartigen Verprägung (5, 12) verlaufen.

8. Gehäuse nach einem der vorhergehenden Ansprüche, **dadurch gekennzeichnet, dass** beiderseits des Zentrums (4) in die erste Verprägung (5) der stirnseitigen Wandung (3) kanalartige Querprägungen (15) eingelassen sind, welche diese querend rechtwinklig zur ersten Verprägung (5) verlaufen.

9. Gehäuse nach Anspruch 8, **dadurch gekennzeichnet, dass** die größte Prägetiefe der Querprägung (15) größer als die Prägetiefe der ersten kanalartigen Verprägung (5) ausgebildet ist.

10. Gehäuse nach Anspruch 4 bis 9, **dadurch gekennzeichnet, dass** von den Seitenflächen der zweiten kanalartigen Verprägung (12) schräg in Richtung des Umfangs abragende Schrägprägungen (16) in der stirnseitigen Wandung (3) vorgesehen sind.

11. Gehäuse nach Anspruch 10, **dadurch gekennzeichnet, dass** die Prägetiefe der Schrägprägungen (16) umfangsfern der Prägetiefe der zweiten kanalartigen Verprägung (12) entspricht.

12. Gehäuse nach Anspruch 10 oder 11, **dadurch gekennzeichnet, dass** die Prägetiefe der Schrägprägungen (16) zum Umfang (6) hin rampenartig abfallend ausgeführt ist.

13. Gehäuse nach Anspruch 4 bis 12, **dadurch gekennzeichnet, dass** beiderseits des Zentrums (4) Bohrungen (17) in die Basisfläche der zweiten kanalartigen Verprägung (12) eingelassen sind, wobei die Bohrungen (17) bevorzugt jeweils mit einem nach außen weisenden Kragenzug (18) ausgestattet sind.

14. Gehäuse nach einem der vorhergehenden Ansprüche, **dadurch gekennzeichnet, dass** die radiale Wandung (2) des Gehäuses eine erste, sich zur stirnseitigen Wandung (3) hin konisch verjüngende Radialfläche (19) und eine sich daran anschließende, zylindrisch verlaufende Radialfläche (20) aufweist.

15. Gehäuse nach einem der vorhergehenden Ansprüche, **dadurch gekennzeichnet, dass** in die radiale Wandung (2), insbesondere im Bereich der sich konisch verjüngenden Radialfläche (19), Lüftungsöffnungen (21) eingelassen sind, wobei in die sich konisch verjüngende Radialfläche bevorzugt Axialprägungen (22) eingelassen sind.

## Claims

1. Housing (1) for the drive of an electrical device, particularly a household appliance, having a radial wall (2) and at least one first front wall (3), which is provided with one or more embossments (5, 23), wherein at least one first embossment (5) in the front wall (3) is designed like a channel and extends between regions of the circumference (6) of the front wall (3) situated opposite one other, **characterised in that** the first channel-like embossment (5) opens into recesses (7) located opposite each other in the radial wall (2) and is designed to receive the brush arrangements (B) of the drive, which can be introduced into the housing (1) through the recesses (7).

2. Housing according to claim 1, **characterised in that** the first channel-like embossment (5) extends in the radial direction through the centre (4) of the front wall (3).

3. Housing according to claim 1 or 2, **characterised in that** the first channel-like embossment (5) is shaped to be outwardly arching.

4. Housing according to one of the preceding claims, **characterised in that** a second channel-like embossment (12) extends through the centre (4) of the front wall (3), skewed by 90° compared with the first channel-like embossment (5).

5. Housing according to one of the preceding claims, **characterised in that** an outward facing dome-like embossment (13) is provided coaxially with the centre (4) of the front wall (3) for receiving a bearing arrangement for the drive.

6. Housing according to claim 5, **characterised in that** the embossing depth of the dome-like embossment (13) is designed to be greater than the embossing depth of the first and/or second channel-like embossment (5, 12).

7. Housing according to claim 6, **characterised in that** further ramp-like embossments (14) are provided which extend from the radial surface of the pot-like embossment to the base surfaces of the first and/or second channel-like embossment (5, 12).

8. Housing according to one of the preceding claims, **characterised in that** on both sides of the centre (4) channel-like transverse embossments (15) are let into the first embossment (5) of the front wall (3), and extend transversely across the latter perpendicular to the first embossment (5).

9. Housing according to claim 8, **characterised in that** the greatest embossing depth of the transverse embossment (15) is designed to be greater than the embossing depth of the first channel-like embossment (5).

10. Housing according to claims 4 to 9, **characterised in that** oblique embossments (16) projecting obliquely in the direction of the circumference from the side surfaces of the second channel-like embossment (12) are provided in the front wall (3).

11. Housing according to claim 10, **characterised in that** the embossing depth of the oblique embossments (16) away from the circumference corresponds to the embossing depth of the second channel-like embossment (12).

12. Housing according to claims 10 or 11, **characterised in that** the embossing depth of the oblique embossments (16) is implemented in sloping ramp-like fashion towards the circumference (6).

13. Housing according to claims 4 to 12, **characterised in that** holes (17) are let into the base surface of the second channel-like embossment (12) on both sides of the centre (4), wherein the holes (17) are preferably equipped in each case with an outward facing collar extension (18).

14. Housing according to one of the preceding claims, **characterised in that** the radial wall (2) of the housing has a first radial surface (19) tapering conically towards the front wall (3) and a cylindrically extending radial surface (20) connecting to it.

15. Housing according to one of the preceding claims, **characterised in that** ventilation openings (21) are let into the radial wall (2) in particular in the region of the conically tapering radial surface (19), wherein axial embossments (22) are preferably let into the conically tapering radial surface.

## Revendications

1. Carter (1) pour l'entraînement d'un appareil électrique, notamment d'un appareil électroménager, comprenant une paroi radiale (2) ainsi qu'au moins une première paroi frontale (3), laquelle est munie d'un ou de plusieurs estampages (5, 23), au moins un premier estampage (5) étant réalisé en forme de canal dans la paroi frontale (3) et s'étendant entre des zones opposées entre elles de la circonférence (6) de la paroi frontale (3), **caractérisé en ce que** le premier estampage (5) en forme de canal aboutit dans des évidements (7), opposés l'un par rapport à l'autre, de la paroi radiale (2) et est réalisé comme logement pour les agencements de brosse (B) de l'entraînement, lesquels sont insérables dans le carter (1) à travers les évidements (7).

2. Carter selon la revendication 1, **caractérisé en ce que** le premier estampage (5) en forme de canal s'étend en direction radiale à travers le centre (4) de la paroi frontale (3).

3. Carter selon la revendication 1 ou 2, **caractérisé en ce que** le premier estampage (5) en forme de canal est formé de manière courbée vers l'extérieur.

4. Carter selon l'une quelconque des revendications précédentes, **caractérisé en ce qu'**un deuxième estampage (12) en forme de canal s'étend à travers le centre (4) de la paroi frontale (3), en face du premier estampage (5) en forme de canal, en étant tourné de 90°.

5. Carter selon l'une quelconque des revendications précédentes, **caractérisé en ce que**, coaxialement au centre (4) de la paroi frontale(3) est ménagé un estampage (13) en forme de dôme, orienté vers l'extérieur, pour le logement d'un agencement de palier de l'entraînement.

6. Carter selon la revendication 5, **caractérisé en ce que** la profondeur d'estampage de l'estampage (13) en forme de dôme est plus grande que la profondeur d'estampage du premier et/ou du deuxième estampages (5, 12) en forme de canal.

7. Carter selon la revendication 6, **caractérisé en ce que** des estampages supplémentaires (14) en forme de rampe sont ménagés, lesquels s'étendent de la surface radiale de l'estampage en forme de pot vers les surfaces de base du premier et/ou du deuxième estampages (5, 12) en forme de canal.

8. Carter selon l'une quelconque des revendications précédentes, **caractérisé en ce que** de chaque côté du centre (4), des estampages transversaux (15) en forme de canal sont encastrés dans le premier estampage (5) de la paroi frontale (3), lesquels s'étendent en traversant celle-ci en angle droit par rapport au premier estampage (5).

9. Carter selon la revendication 8, **caractérisé en ce que** la plus grande profondeur d'estampage de l'estampage transversal (15) est plus grande que la profondeur d'estampage du premier estampage (5) en forme de canal.

10. Carter selon les revendications 4 à 9, **caractérisé en ce que** des estampages inclinés (16) dépassant des surfaces latérales du deuxième estampage (12) en forme de canal de manière oblique en direction de la circonférence sont ménagés dans la paroi frontale (3).

11. Carter selon la revendication 10, **caractérisé en ce que** la profondeur d'estampage des estampages inclinés (16) correspond, de manière éloignée de la circonférence, à la profondeur d'estampage du deuxième estampage (12) en forme de canal.

12. Carter selon la revendication 10 ou 11, **caractérisé en ce que** la profondeur d'estampage des estampages inclinés (16) est réalisée en forme de rampe descendant en direction de la circonférence (6).

13. Carter selon les revendications 4 à 12, **caractérisé en ce que** de chaque côté du centre (4), des trous (17) sont encastrés dans la surface de base du deuxième estampage (12) en forme de canal, les trous (17) étant réalisés de préférence respectivement avec un embout de collet (18) orienté vers l'extérieur.

14. Carter selon l'une quelconque des revendications précédentes, **caractérisé en ce que** la paroi radiale (2) du carter présente une première surface radiale (19) se rétrécissant de manière conique en direction de la paroi frontale (3) et une surface radiale (20) s'étendant de manière cylindrique, se raccordant à cette première surface radiale.

15. Carter selon l'une quelconque des revendications précédentes, **caractérisé en ce que** des ouvertures d'aération (21) sont insérées dans la paroi radiale (2), notamment dans la zone de la surface radiale (19) se rétrécissant de manière conique, de préférence des estampages axiaux (22) étant insérés dans la surface radiale se rétrécissant de manière conique.
